# FASCICULE DE BREVET EUROPEEN

(11) **EP 2 872 237 B1**
(45) Date de publication et mention de la délivrance du brevet: **07.09.2016**
(21) Numéro de dépôt: 13744711.6
(22) Date de dépôt: 08.07.2013
(51) Int. Cl.: B01D 53/22, F25J 3/06, B01D 53/00

(54) **PROCÉDÉ DE SÉPARATION D'UN GAZ RICHE EN DIOXYDE DE CARBONE PAR CONDENSATION PARTIELLE ET PERMÉATION**
VERFAHREN ZUR ABSCHEIDUNG EINES KOHLENDIOXIDREICHEN GASES DURCH PARTIELLE KONDENSATION UND PERMEATION
METHOD FOR SEPARATING A CARBON DIOXIDE-RICH GAS BY PARTIAL CONDENSATION AND PERMEATION

(30) Priorité: 13.07.2012 FR 1256771
(43) Date de publication de la demande: 20.05.2015
(73) Titulaire: L'Air Liquide Société Anonyme pour l'Etude et l'Exploitation des Procédés Georges Claude, 75007 Paris (FR)
(72) Inventeur: DAVIDIAN, Benoit, F-94100 Saint Maur Des Fosses (FR); LECLERC, Mathieu, F-75020 Paris (FR)
(74) Mandataire: Mercey, Fiona Susan
(86) Numéro de dépôt international: PCT/FR2013/051620
(87) Numéro de publication internationale: WO 2014/009643

(56) Documents cités:
- EP-A1- 1 952 874
- US-A1- 2012 009 109
- US-A1- 2012 118 011

## Description

La présente invention est relative à un procédé de séparation d'un gaz riche en dioxyde de carbone par condensation partielle et perméation.

Un gaz riche en dioxyde de carbone contient au moins 65% molaires, ou au moins 80% molaires, voire au moins 90% molaires de dioxyde de carbone, sur base sèche.

Le gaz riche en dioxyde de carbone contient au moins un gaz plus léger, tel que l'oxygène, l'azote, le monoxyde de carbone, l'hydrogène.

De préférence il contient moins que 5% molaire de méthane, voire moins que 2% molaire de méthane.

Tous les pourcentages dans ce document concernant des puretés sont des pourcentages molaires.

La séparation à basse température d'un gaz riche en dioxyde de carbone est particulièrement choisie comme voie de capture du CO₂ quand la concentration du gaz est suffisamment haute (≥30% molaire). Avant d'être refroidi (le plus souvent au plus proche du point triple du CO₂), généralement le gaz doit être séché et sa pression doit être augmentée dans le but de capturer le CO₂ au rendement désiré, car la séparation est essentiellement basée sur la condensation partielle.

On peut augmenter ce rendement par le biais de membranes placées sur la tête du pot de condensation partielle comme illustré dans WO-A-2012/048078 : en effet, on profite de la pression des incondensables que l'on va valoriser dans les membranes.

On choisira des membranes dans lesquelles le CO₂ va perméer préférentiellement par rapport aux autres composés pour capturer le CO₂ dans le perméat des membranes.

Des membranes capables d'effectuer une telle séparation sont connues de WO-A-2011/084516 et de « CO₂ Capture by Subambient Membrane Operation » de Kulkarni et al, 2010 NETL CO₂ Capture Technology.

US 2012/118011 divulgue la séparation d'un gaz riche en CO₂ par condensation partielle et perméation.

Des détails des membranes adaptées pour la présente invention et leur fonctionnement sont donnés dans ces documents.

La perte de pression entre le gaz d'entrée des membranes et le perméat implique une chute importante de température. Cette chute de température sera appliquée à la fois sur le perméat et sur le résidu issu des membranes car le perméat va échanger de la chaleur avec le résidu.

La membrane agit ainsi comme un échangeur de chaleur, à tel point que dans certaines configurations (comme le contre courant) la chute de température est plus importante pour le résidu que pour le perméat.

De plus, le gaz issu du pot de condensation étant à l'équilibre de phase et proche du point triple, une chute de température trop importante pourrait liquéfier du CO₂, voire le geler dans la membrane, ce qui pourrait dégrader ses performances voire menacer son intégrité.

Enfin, si la température du résidu et/ou du perméat descend en deçà de la température du point triple (ce que l'on va facilement atteindre pour des rendements au niveau de la membrane élevés), la valorisation du froid de ces fluides dans un échangeur va s'avérer complexe. En effet, ces fluides étant particulièrement froids, on va chercher à refroidir du CO₂ contre eux. La température de peau au niveau de l'échange (tubes ou plaques par exemples) serait alors très basse et les risques de solidification du CO₂ à refroidir seraient très importants.

La présente invention traite de l'adaptation de la température de sortie des membranes pour éviter des températures trop basses impliquant des risques de solidification du CO₂ lors de la valorisation du froid des fluides en sortie des membranes.

L'invention consiste donc à limiter la chute de température jusqu'à une température supérieure au point triple du CO₂ pour pouvoir assurer la valorisation du froid généré par la séparation membranaire dans le reste du procédé.

Pour limiter la chute de température, on peut augmenter la température d'opération des membranes en réchauffant la tête du pot.

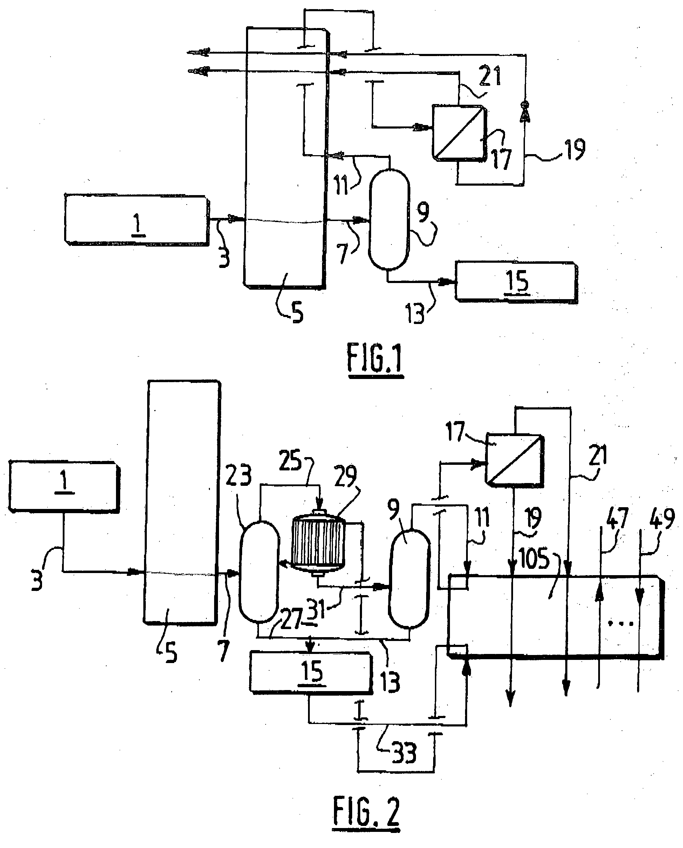

Plusieurs options sont alors possibles :
- réchauffage et valorisation du froid des fluides issus de la membrane dans la ligne d'échange principale (Figure 1),
- réchauffage dans un échangeur dédié (Figure 2), en particulier quand la ligne d'échange est séparée en deux avec la deuxième partie (la plus froide) utilisant une technologie évitant la prise en glace massive de la boite froide (calandre et tubes par exemple).

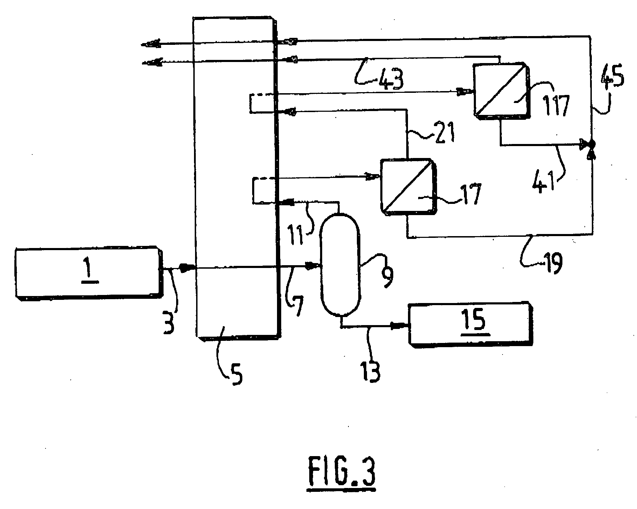

Dans ce schéma, on sous refroidit le CO₂ BP avant sa détente contre tous les gaz dont la température est nettement inférieure à celle de la ligne d'échange (celle des plus hautes températures). Cela permet de cette manière de valoriser du froid à basse température contre des fluides plus chauds à des températures proches ce qui optimise le système par minimisation des pertes exergétiques lors des échanges de chaleur.
- réchauffage de la tête de séparateur de phases et réchauffage intermédiaire (Figure 3). Les performances des membranes cryogéniques sont plus intéressantes quand la température est minimisée. Pour optimiser la séparation membranaire, on va donc réchauffer moins que dans les schémas précédents la tête de pot et pour limiter la chute en température, on va ressortir d'un premier lot de modules, re-réchauffer avant d'aller dans les derniers modules de membranes. Ces deux réchauffages peuvent se faire comme précédemment dans la ligne d'échange principale ou dans un échangeur dédié.

On pourra répéter les réchauffages intermédiaires autant que possible pour optimiser le système.

Quelle que soit la solution choisie, on fera attention à adapter la perte de charge dans les échangeurs dans les passes du (ou des) perméat(s) des membranes. En effet, la pression coté perméat étant particulièrement faible, le débit volumique du gaz est très important, ce qui impacte grandement la taille des échangeurs. Choisir des pertes de charges importantes permettrait de diminuer la section de passage du (ou des) perméat(s) diminuant ainsi la taille de l'échangeur.

Selon un objet de l'invention, il est prévu un procédé de séparation d'un gaz riche en dioxyde de carbone par condensation partielle et perméation dans lequel le gaz riche en dioxyde de carbone est refroidi au moins dans un premier échangeur de chaleur, le gaz riche en dioxyde de carbone refroidi dans le premier échangeur de chaleur ou un fluide dérivé de ce gaz rentre dans un premier séparateur de phases à une première température entre -50°C et -53°C, un liquide enrichi en dioxyde de carbone est soutiré du premier séparateur de phases et sert de produit ou est traité pour l'enrichir encore plus en dioxyde de carbone, un gaz appauvri en dioxyde de carbone du premier séparateur de phases est réchauffé dans le premier échangeur ou un deuxième échangeur jusqu'à une deuxième température entre -35°C et -45°C, sans avoir été détendu en aval du premier séparateur de phases et rentre dans une unité de perméation à la deuxième température, le gaz réchauffé subit au moins une étape de perméation dans l'unité de perméation pour produire au moins deux fluides qui sont réchauffés ensuite dans l'échangeur dans lequel le gaz appauvri a été réchauffé, le fluide issu de l'unité de perméation réchauffé dans l'échangeur qui sort de l'unité de perméation à la température la plus basse étant à une température au-dessus de -54°C.

Selon d'autres aspects facultatifs :
- le gaz appauvri est réchauffé dans le deuxième échangeur et les au moins deux fluides issus de la perméation étant réchauffés dans le deuxième échangeur, le deuxième échangeur ne servant pas à refroidir le gaz riche en dioxyde de carbone.
- un fluide provenant du traitement du liquide enrichi en dioxyde de carbone est envoyé au deuxième échangeur à une température inférieure à -40°C, pour réchauffer le gaz appauvri et les au moins deux fluides issus de la perméation.
- le fluide provenant du traitement de liquide est un liquide contenant au moins 90% de dioxyde de carbone produit par distillation et détendu dans une vanne.
- le gaz appauvri est réchauffé dans le premier échangeur tout comme les fluides issus de la perméation.
- l'unité de perméation permet d'effectuer une seule étape de perméation et le perméat et le résidu de l'étape de perméation sont envoyés se réchauffer dans le premier ou le deuxième échangeur de chaleur.
- l'unité de perméation permet d'effecteur une première étape de perméation, produisant un perméat et un résidu, au moins une partie du résidu étant ensuite séparé par une deuxième étape de perméation avec une température d'entrée entre -40°C et -45°C, au moins deux des fluides choisis dans la liste au moins une partie d'un résidu de la première étape et/ou au moins une partie d'un résidu de la deuxième étape et/ou au moins une partie d'un perméat de la deuxième étape et/ou au moins une partie d'un perméat de la première étape étant réchauffés dans le premier ou le deuxième échangeur.
- le gaz riche en dioxyde de carbone est envoyé du premier échangeur de chaleur au premier séparateur de phases sans avoir été séparé par perméation.
- le gaz riche en dioxyde de carbone est traité par une étape de condensation partielle et le gaz formé est au moins partiellement condensé pour former le fluide dérivé du gaz riche en dioxyde de carbone qui rentre dans le premier séparateur de phases.

Selon un autre aspect qui ne fait pas partie de l'invention, il est prévu un appareil de séparation d'un gaz riche en dioxyde de carbone par condensation partielle et perméation comprenant un premier échangeur de chaleur, des moyens pour envoyer le gaz riche en dioxyde de carbone se refroidir au moins dans un premier échangeur de chaleur, un premier séparateur de phases, des moyens pour envoyer le gaz riche en dioxyde de carbone refroidi dans le premier échangeur de chaleur ou un fluide dérivé de ce gaz dans le premier séparateur de phases à une première température entre -50°C et -53°C, des moyens pour soutirer un liquide enrichi en dioxyde de carbone du premier séparateur de phases pour servir de produit ou pour être traité pour l'enrichir encore plus en dioxyde de carbone, des moyens pour envoyer un gaz appauvri en dioxyde de carbone du premier séparateur de phases se réchauffer jusqu'à une température intermédiaire du premier échangeur ou d'un deuxième échangeur, la température intermédiaire étant une deuxième température entre -35°C et -45°C, sans moyen de détente du gaz appauvri en dioxyde de carbone en aval du premier séparateur de phases, des moyens pour envoyer le gaz appauvri réchauffé dans une unité de perméation à la deuxième température, des moyens pour sortir au moins deux fluides de l'unité de perméation, des moyens pour envoyer les au moins deux fluides se réchauffer dans l'échangeur dans lequel le gaz appauvri a été réchauffé de sorte que le fluide issu de l'unité de perméation et réchauffé dans l'échangeur qui sort de l'unité de perméation à la température la plus basse soit à une température au-dessus de -54°C.

L'invention sera décrite en plus de détail en se référant aux figures. Les Figures 1 à 3 représentent des procédés selon l'invention.

Dans la Figure 1, une unité d'oxycombustion 1 produit un débit de gaz 3 riche en dioxyde de carbone contenant au moins 80% de dioxyde de carbone en base sèche, ainsi qu'au moins de l'oxygène, de l'azote et de l'argon. Le gaz se refroidit dans un premier échangeur de chaleur 5 qui est un échangeur à plaques et à ailettes en aluminium brasé. Le gaz refroidi 7 à une température entre -50°C et -53°C est envoyé dans un séparateur de phases 9 qui produit un gaz 11 enrichi en oxygène, azote et argon contenant 34% de dioxyde de carbone et un liquide 13 enrichi en dioxyde de carbone. Le liquide 13 est envoyé à un stockage 15 comme produit final. Le gaz 11 est réchauffé dans le premier échangeur 5 à entre -35°C et -45°C, par exemple -40°C et puis envoyé à une étage de séparation par perméation 17. Cette perméation provoque un refroidissement des produits. Le perméat 19 à -42°C est détendu puis envoyé se réchauffer dans le premier échangeur 5. Le résidu 21 à -51 °C est également envoyé se réchauffer dans le premier échangeur 5. Le plus froid des deux fluides 19, 21 est à une température au-dessus de -54°C à la sortie de l'unité 17.

Dans la Figure 2, une unité d'oxycombustion 1 produit un débit de gaz 3 riche en dioxyde de carbone contenant au moins 65% de dioxyde de carbone, ainsi qu'au moins de l'oxygène, de l'azote et de l'argon. Le gaz se refroidit dans un premier échangeur de chaleur 5 qui est un échangeur à plaques et à ailettes en aluminium brasé. Le gaz refroidi 7 est envoyé à un séparateur de phases 23 pour produire un gaz 25 enrichi en oxygène, azote et argon et un liquide 27. Le liquide 27 est détendu et alimenté la tête d'une colonne de séparation à basse température 15. Le gaz 25 est partiellement condensé dans un échangeur 29 à tubes et à calandre pour produire un débit diphasique 31. Ce débit 31 est à une température entre -50°C et -53°C et est envoyé dans un séparateur de phases 9 qui produit un gaz 11 enrichi en oxygène, azote et argon et un liquide 13 enrichi en dioxyde de carbone. Le liquide 13 est envoyé à la tête de la colonne 15. Le gaz 11 est réchauffé un second échangeur 105 jusqu'à entre -35°C et -45°C et puis envoyé à une étage de séparation par perméation 17. Cette perméation provoque un refroidissement des produits. Le perméat 19 est détendu puis envoyé se réchauffer dans le second échangeur 105. Le résidu 21 est également envoyé se réchauffer dans le second échangeur 105. Le plus froid des deux fluides 19,21 est à une température au-dessus de -54°C à la sortie de l'unité 17. Le liquide de cuve 33 de la colonne de distillation se refroidit dans le second échangeur 105. Un fluide froid 47 à moins que -40°C peut se réchauffer dans l'échangeur 105. Un fluide 49 s'y refroidit. Le liquide 33 sousrefroidi dans le deuxième échangeur 105 se vaporise dans l'échangeur 29 pour former un produit gazeux qui se réchauffe ensuite dans le premier échangeur 5.

Dans la Figure 3, une unité d'oxycombustion 1 produit un débit de gaz 3 riche en dioxyde de carbone contenant au moins 80 % de dioxyde de carbone, ainsi qu'au moins de l'oxygène, de l'azote et de l'argon. Le gaz se refroidit dans un premier échangeur de chaleur 5 qui est un échangeur à plaques et à ailettes en aluminium brasé. Le gaz refroidi 7 à une température entre -50°C et -53°C est envoyé dans un séparateur de phases 9 qui produit un gaz 11 enrichi en oxygène, azote et argon et contenant 34% de dioxyde de carbone et un liquide 13 enrichi en dioxyde de carbone. Le liquide 13 est envoyé à un stockage 15 comme produit final. Le gaz 11 est réchauffé dans le premier échangeur 5 à entre -35°C et -45°C, par exemple -45°C et puis envoyé à deux étages de séparation par perméation en série 17, 117 formant une unité de perméation. Cette perméation provoque un refroidissement des produits. Le perméat 19 du premier étage de perméation 17 à -50°C est envoyé se réchauffer dans le premier échangeur 5. Le résidu 21 à -53°C est également envoyé se réchauffer dans le premier échangeur 5 jusqu'à une température intermédiaire de celui-ci (-45°C) puis alimente la deuxième étage de perméation 117 pour produire un perméat 41 à -47°C et un résidu 43 à -50°C. Le résidu se réchauffe dans le premier échangeur et le perméat 41 se mélange avec le perméat 19 pour faire un débit 45 à -49°C. Le plus froid des quatre fluides 19, 21, 41, 43 qui est le résidu 21 du premier étage est à une température au-dessus de -54°C à la sortie de l'unité 17, 117.

Comme le rendement du premier étage est de 64% et celui du deuxième est de 79%, le rendement global de l'unité de perméation est de 92%.

Il est également possible d'exploiter l'invention dans la variante de la Figure 3 sans réchauffer le résidu 21 du premier étage 17. Cette version n'est pas illustrée. Dans ce cas, le gaz 11 est à -45°C, le perméat 19 est à -42°C et le résidu 21 est à -51 °C. Le résidu arrive dans le deuxième étage 117 toujours à -51 °C.

Le perméat produit 41 est à -54°C et le résidu 43 est à -54°C. Les deux perméats se mélangent pour former un débit à -45°C. Comme le rendement du premier étage est de 75% et celui du deuxième est de 78%, le rendement global de l'unité de perméation est de 92%.

## Revendications

1. Procédé de séparation d'un gaz riche en dioxyde de carbone qui contient au moins 65% molaires de dioxyde de carbone sur base sèche par condensation partielle et perméation dans lequel le gaz riche en dioxyde de carbone est refroidi au moins dans un premier échangeur de chaleur (5), le gaz riche en dioxyde de carbone refroidi dans le premier échangeur de chaleur ou un fluide dérivé de ce gaz rentre dans un premier séparateur de phases (9) à une première température entre -50°C et -53°C, un liquide (13) enrichi en dioxyde de carbone est soutiré du premier séparateur de phases et sert de produit ou est traité pour l'enrichir encore plus en dioxyde de carbone, un gaz (11) appauvri en dioxyde de carbone du premier séparateur de phases est réchauffé dans le premier échangeur ou un deuxième échangeur (105) jusqu'à une deuxième température entre -35°C et -45°C, sans avoir été détendu en aval du premier séparateur de phases et rentre dans une unité de perméation (17, 117) à la deuxième température, le gaz réchauffé subit au moins une étape de perméation dans l'unité de perméation pour produire au moins deux fluides (19, 21, 41, 43) qui sont réchauffés ensuite dans l'échangeur (5, 105) dans lequel le gaz appauvri a été réchauffé, le fluide issu de l'unité de perméation, réchauffé dans l'échangeur, qui sort de l'unité de perméation à la température la plus basse étant à une température au-dessus de -54°C.

2. Procédé selon la revendication 1 dans lequel le gaz appauvri (11) est réchauffé dans le deuxième échangeur (105) et les au moins deux fluides issus de la perméation (19,21) étant réchauffés dans le deuxième échangeur, le deuxième échangeur ne servant pas à refroidir le gaz (3) riche en dioxyde de carbone.

3. Procédé selon la revendication 2 dans lequel un fluide (33) provenant du traitement du liquide enrichi en dioxyde de carbone est envoyé au deuxième échangeur (105) à une température inférieure à -40°C, pour réchauffer le gaz appauvri et les au moins deux fluides issus de la perméation.

4. Procédé selon la revendication 3 dans lequel le fluide provenant du traitement de liquide (33) est un liquide contenant au moins 90% de dioxyde de carbone produit par distillation et détendu dans une vanne.

5. Procédé selon la revendication 1 dans lequel le gaz appauvri (11) est réchauffé dans le premier échangeur tout comme les fluides (19, 21, 41, 43) issus de la perméation.

6. Procédé selon l'une des revendications précédentes dans lequel l'unité de perméation (17) permet d'effectuer une seule étape de perméation et le perméat (19) et le résidu (21) de l'étape de perméation sont envoyés se réchauffer dans le premier ou le deuxième échangeur de chaleur (5, 105).

7. Procédé selon l'une des revendications précédentes dans lequel l'unité de perméation (17, 117) permet d'effecteur une première étape de perméation, produisant un perméat (19) et un résidu (21), au moins une partie du résidu étant ensuite séparé par une deuxième étape de perméation avec une température d'entrée entre -40°C et -45°C, au moins deux des fluides choisis dans la liste au moins une partie d'un résidu de la première étape (21) et/ou au moins une partie d'un résidu de la deuxième étape (43) et/ou au moins une partie d'un perméat (41) de la deuxième étape et/ou une partie d'un perméat (19) de la première étape étant réchauffés dans le premier ou le deuxième échangeur (5, 105).

8. Procédé selon l'une des revendications précédentes dans lequel le gaz riche en dioxyde de carbone (3) est envoyé du premier échangeur de chaleur (5) au premier séparateur de phases (9) sans avoir été séparé par perméation.

9. Procédé selon l'une des revendications précédentes dans lequel le gaz riche en dioxyde de carbone (3) est traité par une étape de condensation partielle et le gaz formé (25) est au moins partiellement condensé pour former le fluide (31) dérivé du gaz riche en dioxyde de carbone qui rentre dans le premier séparateur de phases.

## Patentansprüche

1. Verfahren zum Trennen eines kohlendioxidreichen Gases, das mindestens 65 Mol-%, auf Trockenbasis, Kohlendioxid enthält, durch Teilkondensation und Permeation, wobei das kohlendioxidreiche Gas mindestens in einem ersten Wärmetauscher (5) abgekühlt wird, das im ersten Wärmetauscher abgekühlte kohlendioxidreiche Gas oder ein von diesem Gas abstammendes Fluid mit einer ersten Temperatur zwischen -50 °C und -53 °C in einen ersten Phasentrenner (9) eintritt, eine mit Kohlendioxid angereicherte Flüssigkeit (13) aus dem ersten Phasentrenner abgezogen wird und als Produkt dient oder behandelt wird, um sie noch stärker mit Kohlendioxid anzureichern, ein kohlendioxidabgereichertes Gas (11) vom ersten Phasentrenner in dem ersten Wärmetauscher oder einem zweiten Wärmetauscher (105) wieder bis auf eine zweite Temperatur zwischen -35 °C und -45 °C erwärmt wird, ohne stromabwärts vom ersten Phasentrenner entspannt worden zu sein, und mit der zweiten Temperatur in eine Permeationseinheit (17, 117) eintritt, das wieder erwärmte Gas mindestens einem Permeationsschritt in der Permeationseinheit unterzogen wird, um mindestens zwei Fluids (19, 21, 41, 43) zu erzeugen, die anschließend in dem Wärmetauscher (5, 105) wieder erwärmt werden, in dem das abgereicherte Gas wieder erwärmt worden ist, das Fluid, das aus der Permeationseinheit hervorgegangen ist und im Wärmetauscher wieder erwärmt wird, die Permeationseinheit mit der niedrigsten Temperatur verlässt, wobei es auf einer Temperatur über -54 °C ist.

2. Verfahren nach Anspruch 1, wobei das abgereicherte Gas (11) im zweiten Wärmetauscher (105) wieder erwärmt wird und die mindestens zwei Fluids, die aus der Permeation (19, 21) hervorgegangen sind, im zweiten Wärmetauscher wieder erwärmt werden, wobei der zweite Wärmetauscher nicht dazu dient, das kohlendioxidabgereicherte Gas (3) abzukühlen.

3. Verfahren nach Anspruch 2, wobei ein Fluid (33), das von der Behandlung der kohlendioxidreichen Flüssigkeit kommt, mit einer Temperatur unter -40 °C in den zweiten Wärmetauscher (105) geschickt wird, um das abgereicherte Gas und die mindestens zwei Fluids, die aus der Permeation hervorgegangen sind, wieder zu erwärmen.

4. Verfahren nach Anspruch 3, wobei das Fluid, das von der Flüssigkeitsbehandlung (33) kommt, eine Flüssigkeit ist, die mindestens 90 % Kohlendioxid enthält, das durch Destillation erzeugt und in einem Ventil entspannt worden ist.

5. Verfahren nach Anspruch 1, wobei das abgereicherte Gas (11) im ersten Wärmetauscher wieder erwärmt wird, genauso wie die Fluids (19, 21, 41, 43), die aus der Permeation hervorgegangen sind.

6. Verfahren nach einem der vorhergehenden Ansprüche, wobei die Permeationseinheit (17) ermöglicht, einen einzigen Permeationsschritt auszuführen, und das Permeat (19) und der Rückstand (21) vom Permeationsschritt zum Wiedererwärmen in den ersten oder den zweiten Wärmetauscher (5, 105) geschickt werden.

7. Verfahren nach einem der vorhergehenden Ansprüche, wobei die Permeationseinheit (17, 117) ermöglicht, einen ersten Permeationsschritt auszuführen, wodurch ein Permeat (19) und ein Rückstand (21) erzeugt werden, wobei anschließend mindestens ein Teil des Rückstandes durch einen zweiten Permeationsschritt bei einer Anfangstemperatur zwischen -40 °C und -45 °C abgetrennt wird, mindestens zwei der Fluids, ausgewählt aus der Liste von mindestens einem Teil eines Rückstandes vom ersten Schritt (21) und/oder mindestens einem Teil eines Rückstandes vom zweiten Schritt (43) und/oder mindestens einem Teil eines Permeats (41) vom zweiten Schritt und/oder einem Teil eines Permeats (19) vom ersten Schritt, im ersten oder zweiten Wärmetauscher (5, 105) wieder erwärmt werden.

8. Verfahren nach einem der vorhergehenden Ansprüche, wobei das kohlendioxidreiche Gas (3) vom ersten Wärmetauscher (5) zum ersten Phasentrenner (9) geschickt wird, ohne durch Permeation getrennt worden zu sein.

9. Verfahren nach einem der vorhergehenden Ansprüche, wobei das kohlendioxidreiche Gas (3) durch einen Teilkondensationsschritt behandelt wird und das gebildete Gas (25) mindestens teilweise kondensiert wird, um das von dem kohlendioxidreichen Gas abstammende Fluid (31) zu bilden, das in den ersten Phasentrenner eintritt.

## Claims

1. Method for separating a gas rich in carbon dioxide that contains at least 65% molar carbon dioxide dry basis by partial condensation and permeation in which the gas rich in carbon dioxide is cooled at least in a first heat exchanger (5), the gas rich in carbon dioxide cooled in the first heat exchanger or a fluid derived from this gas enters a first phase separator (9) at a first temperature of between -50°C and -53°C, a liquid (13) enriched with carbon dioxide is taken off from the first phase separator and serves as a product or is treated in order to enrich it further with carbon dioxide, a gas (11) depleted in carbon dioxide from the first separator is heated in the first exchanger or a second exchanger (105) to a second temperature of between -35°C and -45°C, without having been expanded downstream of the first separator, enters a permeation unit (17, 117) at the second temperature, the heated gas undergoes at least one permeation step in the permeation unit in order to produce at least two fluids (19, 21, 41, 43) that are next heated in the exchanger (5, 105) in which the depleted gas was heated, the fluid issuing from the permeation unit, heated in the exchanger, which emerges from the permeation unit at the lower temperature being a temperature above -54°C.

2. Method according to claim 1, in which the depleted gas (11) is heated in the second exchanger (105) and the at least two fluids issuing from the permeation (19, 21) being heated in the second exchanger, the second exchanger not serving to cool the gas (3) rich in carbon dioxide.

3. Method according to claim 2, in which a fluid (33) coming from the treatment of the liquid enriched with carbon dioxide is sent to the second exchanger (105) at a temperature below -40°C, in order to heat the depleted gas and the at least two fluids issuing from the permeation.

4. Method according to claim 3, in which the fluid coming from the treatment of liquid (33) is a liquid containing at least 90% carbon dioxide produced by distillation and expanded in a valve.

5. Method according to claim 1, in which the depleted gas (11) is heated in the first exchanger just like the fluids (19, 21, 41, 43) issuing from the permeation.

6. Method according to one of the preceding claims, in which the permeation unit (17) makes it possible to perform a single permeation step and the permeate (19) and the residue (21) from the permeation step are sent to be heated in the first or second heat exchanger (5, 105).

7. Method according to one of the preceding claims, in which the permeation unit (17, 117) makes it possible to perform a first permeation step, producing a permeate (19) and a residue (21), at least part of the residue next being separated by a second permeation step with an entry temperature of between -40°C and -45°C, at least two of the fluids chosen from the list at least part of a residue of the first step (21) and/or at least part of a residue of the second step (43) and/or at least part of a permeate (41) of the second step and/or a part of a permeate (19) of the first step being heated in the first or second exchanger (5, 105).

8. Method according to one of the preceding claims, in which the gas rich in carbon dioxide (3) is sent from the first heat exchanger (5) to the first phase separator (9) without having been separated by permeation.

9. Method according to one of the preceding claims, in which the gas rich in carbon dioxide (3) is treated by a partial condensation step and the gas formed (25) is at least partially condensed in order to form the fluid (31) derived from the gas rich in carbon dioxide that enters the first phase separator.
